(19) Europäisches Patentamt
European Patent Office
Office européen des brevets

(11) EP 1 548 464 A1

(12) # EUROPEAN PATENT APPLICATION

(43) Date of publication:
**29.06.2005 Bulletin 2005/26**

(51) Int Cl.$^7$: **G01T 1/167**, G01T 1/178

(21) Application number: **03104965.3**

(22) Date of filing: **23.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **The European Atomic Energy Community (EURATOM), represented by the European Commission**
**1049 Brussels (BE)**

(72) Inventors:
- **Peerani, Paolo**
**21032, Caravate (VA) (IT)**
- **Ravazzani, Andrea**
**20029, Turbigo (MI) (IT)**
- **Schillebeeckx, Peter**
**Vosselaar (BE)**
- **Jaime Tornin, Ricardo**
**1160, Bruxelles (BE)**

(74) Representative: **Ocvirk, Philippe et al**
**Office Ernest T. Freylinger S.A.**
**P.O. Box 48**
**8001 Strassen (LU)**

(54) **Method for quantitative analysis of uranium in nuclear fuel containers**

(57) A method for determining the uranium content in a container of nuclear material is presented. The method includes the steps of:

detecting the gamma-ray emissions due to the natural radioactive decay of the nuclear material in a number of zones of the container;

analysing the gamma-ray signals from each of the zones to determine for each zone a gamma-ray count of gamma-rays having an energy of 1001 keV; and

determining an indication of the total uranium-238 content in the container based on the gamma-ray counts determined for the zones.

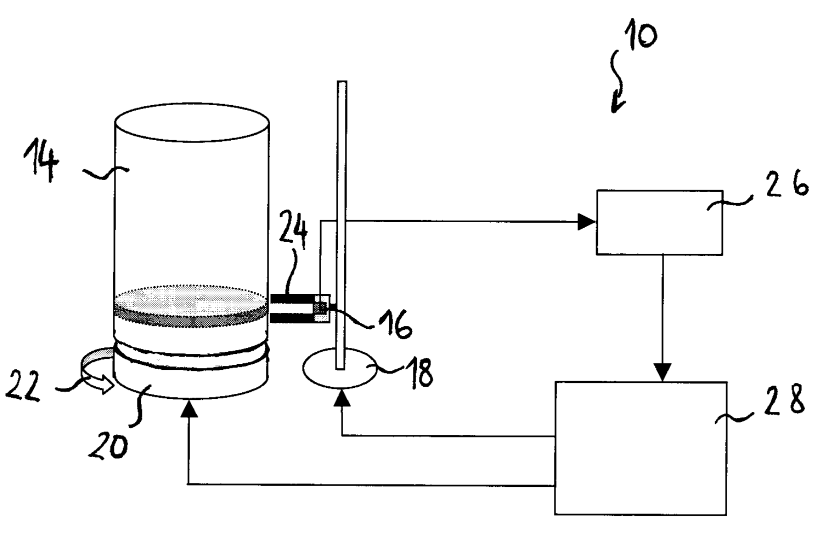


Fig.2

EP 1 548 464 A1

Printed by Jouve, 75001 PARIS (FR)

## Description

FIELD OF THE INVENTION

The present invention generally relates to a method for determining the uranium content in a container of nuclear material, and is more particularly concerned with the determination of the mass of uranium-238 in a container of nuclear material.

BACKGROUND OF THE INVENTION

Civil nuclear plants are subjected to the regime of nuclear safeguards and the plant operator has the duty of keeping an inventory of Special Nuclear Material. Control authorities, such as Euratom Safeguards Office (ESO), the International Atomic Energy Agency (IAEA) or other National Authorities, have the task to verify this inventory in order to make sure that no nuclear material is diverted to any non-intended use.

In nuclear fuel fabrication facilities the primary material (e.g. uranium dioxide in powder form) is generally stored in large containers (up to a few tenths of kilograms). Inspectors have the charge of verifying these containers, both qualitatively (isotopic composition) and quantitatively (uranium mass).

Gamma spectrometry is routinely used for qualitative assessment of uranium samples to measure the enrichment (ratio of the U-235 mass to the total uranium mass). This method is convenient to implement, since it only requires a gamma-ray detector for measuring the natural emissions from the container.

To achieve a quantification of the mass (either of the total uranium mass or of the fissile U-235 isotope), active neutron interrogation methods are generally applied. Compared to enrichment measurement, the uranium mass determination is much more complex to implement, in particular due to the need of a neutron source.

OBJECT OF THE INVENTION

The object of the present invention is to provide an improved method for determining the uranium content in a container of nuclear material. This object is achieved by a method as claimed in claim 1.

SUMMARY OF THE INVENTION

According to the present invention, a method for determining the uranium content in a container of nuclear material comprises the following steps:

- detecting the gamma-ray emissions due to the natural radioactive decay of the nuclear material for a number of zones of the container, from the outside of the container;
- analysing the gamma-ray signals from each of these zones to determine for each zone a gamma-ray count indicative of gamma-rays having an energy of 1001 keV; and
- determining an indication of the total uranium-238 content in the container based on the gamma-ray counts determined for at least part of the zones.

Contrary to the conventional quantitative analysis based on neutron interrogation, the present method permits the uranium-238 (herein noted U-238) mass estimation within a container from gamma-ray emissions due to the natural decay of the nuclear material, and thus without requiring any irradiating source. The present method is based on the assumed equilibrium between U-238 with one of its daughters $^{234m}$Pa (m stands for metastable), which emits the 1001 keV photon. It will be understood that it is only when this equilibrium exists that the most accurate information about the measurement of the U-238 mass by gamma-ray spectroscopy will be obtained. In fact, $^{234}$Pa has a very short half-life (6.78h) compared with the life of the parent U-238, but the equilibrium is determined by the intermediate precursor 234-Th (half-life of 24 days), so that the equilibrium is typically established after a few months after any chemical process. By virtue of this equilibrium, a proportionality relationship between the U-238 mass and the count (or count rate) of the 1001 keV gamma-rays can be established. The total uranium content of the nuclear material is also derivable from the U-238 mass (the main isotope) and the enrichment (which can be determined by gamma spectrometry).

It will further be appreciated that in the present method, gamma-ray detection is carried out for a number of zones of the container and basically consists in detecting for each zone the gamma-ray count of the 1001 keV photons. Hence, the scanning is performed for a number of zones, without having to open the container or handle the nuclear material. The data obtained for these zones are then used to determine (or estimate) the total U-238 mass in the container.

It will be understood that the gamma-ray detection is typically done by means of a detector (or a plurality of detectors), that preferably acquires a whole spectrum of gamma-rays for each zone. The detector produces pulses, which have magnitudes proportional to the to the energy of the gamma-rays. Counting the pulses corresponding to an energy of 1001 keV permits to determine a gamma-ray count for gamma-rays having an energy of 1001 keV. To be used in the present method, this gamma-ray count can be expressed either as an absolute value or as a count rate (in $s^{-1}$).

In practice, the gamma-ray count for each zone is preferably determined within a predetermined range of energy including the 1001 keV peak. This will generally be a narrow range of energy centred about the 1001 keV, to include the spread due to the energy resolution of the detector.

In a preferred embodiment, the natural gamma-ray emissions are detected sequentially in zones (or segments) along a longitudinal axis of the container. In addition, it is preferred that for each zone, the gamma-ray emissions are detected around the whole periphery of the container, which takes into account variations in homogeneity. The natural gamma-ray emissions are detected by means of a collimated detector. Therefore, the size of a zone in the longitudinal direction of the container shall normally correspond to the size of the collimator slit in this longitudinal direction.

Segmented scanning is advantageous in that it gives an indication of the 1001 keV count in function of the position along the container axis, thus giving the 1001 keV profile of the container. This allows to determine which zones of the container are to be considered for the calculations. Typically the end zones of the container, where no material is present (identifiable by negligible gamma-ray counts) will be ignored for the calculations. Integrating this profile over the significant zones (i.e. the zones for which the measured count rate is not only due to background noise but is worth to be taken into account) thus gives the sum of the 1001 keV gamma-ray counts for the container.

Advantageously, the gamma-ray counts of the 1001 keV photons are corrected for self-attenuation. This correction for self-attenuation shall normally take into account the density and mass fraction of uranium in the nuclear material (typically uranium oxide), the density being determined from the fill height of the container, the mass of the nuclear material and the inner cross-section of the container. In this connection, it is to be noted that the fill height of the container is preferably determined by analysis of a gamma-ray profile of the container. This may be done with an iterative weighted least square fit of the gamma-ray profile. The mass of nuclear material and inner cross-section of the container are preferably either read from a database or declared during analysis. In fact, the values of the mass of the nuclear material and of the container cross-section are preferably known values, so as to simplify the calculations. The use of such *a priori* information (i.e. the known values) is of particular interest when the method is to be implemented in the inspection of nuclear fuel fabrication facilities, where inspectors typically have this kind of information on the containers to be verified.

For ease of calculation and when allowed by the detector/container geometry, the determination of the U-238 content advantageously uses a calibration constant taking into account the effects of detector efficiency, the measurement geometry and the specific U-238 emission rate. This calibration constant is preferably determined with standards of the same shape and volume. The indication of the total uranium-238 content in the container may then be simply determined by multiplying the sum of the 1001 keV gamma-ray counts from the significant zones (determined from the 1001 keV profile) by the calibration constant. For this calculation, gamma ray count rates corrected for self-attenuation are preferably used.

It will be appreciated that the present method shall further advantageously include the steps of:

analysing the gamma-ray signals from each of the zones to determine for each zone a second gamma-ray count representative of gamma-rays having an energy of 185.7 keV; and

determining an indication of the U-235 abundance in the container based on the second gamma-ray counts determined for at least part of the zones.

Extracting the 185.7 KeV counts for the container permits to easily determine the U-235 abundance (or enrichment) of the nuclear material in the container, using e.g. the enrichment meter principle. It follows that the present method, which simply uses gamma spectroscopy as analysis tool, permits to carry out both a qualitative and quantitative analysis of a container filled with nuclear material.

The second gamma-ray count is preferably determined within a predetermined range of energy including the characteristic peak of 185.7 keV in order to take into account the spread due to the energy resolution of the detector.

The indication of the U-235 abundance in the container is preferably determined by multiplying the average of the second gamma-ray counts from at least part of the zones by a calibration constant. In this case, the average of the second gamma-ray counts is easily obtained from the 185.7 keV profile (count vs. axial position), by summing the gamma-ray counts for the significant zones and diving this sum by the number of significant zones. Furthermore, the calibration constant preferably takes into account matrix attenuation effects.The present method also preferably comprises the step of calculating the total oxide mass from the total U-238 mass, the uranium fraction ratio in the nuclear material ($U_f$) and the U-235 abundance.

The method according to the present invention is thus particularly well adapted for application in nuclear inspections, in order to verify the uranium content of containers of nuclear material. In this regard, the method allows analysing the containers of the primary material, which are typically filled with uranium oxide (e.g. as $UO_2$ or $U_3O_8$) in powder form. The present method may however be implemented to detect the uranium content in a variety of nuclear material containers.

BRIEF DESCRIPTION OF THE DRAWINGS

The present invention will now be described, by way of example, with reference to the accompanying drawings, in which:

FIG.1: is a sketch illustrating the homogenous parallelepiped volume Np seen by the collimated detector;

FIG.2: is a diagram of a scanning system for carrying out the present method;

FIG.3: is a flow chart indicating the main steps of a preferred embodiment of the present method;

FIG.4: is a graph showing the scanning profile (count rate vs. axial position) of the 1001 keV photon for a container, measured with three different collimators;

FIG.5: is a graph showing the scanning profile (count rate vs. axial position) of the 185.7 keV photon for a container, measured with three different collimators; and

FIG.6: is a graph illustrating the fitting of a typical 185.7 keV profile for determining the fill height of a container.

DETAILED DESCRIPTION OF A PREFERRED EMBODIMENT

A preferred embodiment of the present method will be described in more detail herebelow, wherein both a qualitative and quantitative analysis of the uranium content in a container is achieved by gamma spectrometry. This embodiment is applied to the determination of the U-238 mass and the U-235/U enrichment in a container of nuclear material such as uranium oxide. Such a container typically is a cylinder closed at both ends, which is filled with uranium oxide powder.

The U-238 mass and the U-235/U abundance are determined from a series of gamma spectra covering the full length of the supposed homogeneous container. Two scanning profiles of interest are obtained with a collimated detector, one from the 1001 keV and the other from the 185.7 keV (hereinafter indifferently also noted 186 keV) photon net peak areas.

The U-238 mass is proportional to the integral of the net peak areas of the 1001 keV photon. Since the 1001-keV photon is emitted by the $^{234m}$Pa ,this relationship assumes the equilibrium between $^{234m}$pa and the U-238, which is easily verified in practice. According to the present method, the U-238 mass is obtained by multiplying the integrated 1001 keV profile on the container fill height by a calibration constant. A correction procedure for the self-attenuation of the 1001 keV photon in the container is included.

The enrichment meter principle is applied for the verification of the U-235/U abundance. Supposing the infinite thickness conditions, the U-235/U abundance is proportional to the net peak area of the 185.7 keV photon. The abundance is obtained by multiplying the average of the corresponding profile plateau by a calibration constant.

## 1. Theoretical background

Without willing to be bound by theory, the preferred calculations for determining the U-238 mass and the enrichment will first be explained herebelow. In the present embodiment, the mass and enrichment determination uses a number of conventional assumptions that are verified in practice and simplify the calculations, such as container homogeneity, far-field and infinite thickness conditions. The acquisition of the gamma spectra is carried out by means of a moving collimated detector.

## 1.1 Method for the determination of U-238 mass and U-235/U ratio

The homogeneous container is ideally considered as a parallelepiped sample divided by horizontal planes in a series of parallelepiped volume $N_p$. Each volume presents a depth *d,* a wall thickness $d_W$ and a vertical square section *S* that matches perfectly with the collimator slit. The measurement of the $N_p$ volume is ideally considered in far-field condition since the sample-to-detector distance is supposed large compared to the depth *d.* It means that only parallel beams from the emitting isotope in the volume reach the detector. Consequently the $1/r^2$ effect can be neglected and the detection efficiency is constant along *d.* This measurement configuration is represented in Fig.1, wherein reference sign 2 indicates a detector equipped with a slit collimator 4, which separates the detector 2 from the measured sample.

The response of the detector when only a full energy peak is considered is given by the general expression:

$$R_{ni} = \varepsilon(E_n)\ \beta_{ni}\lambda_i\ \frac{N_{Av}}{A_i}\ \alpha_i\ w_e\ \rho Sd\frac{1-e^{-\mu|E_n|\rho d}}{\mu|E_n|\rho d}\ T_W(E_n) \tag{1}$$

with:

$$\mu(E_n)\rho = \mu_e(E_n)\rho_e + \mu_m(E_n)\rho_m \tag{1a}$$

and

$$T_W(E_n) = e^{-\mu_W(E_n)\rho_W d_W} \tag{1b}$$

where $R_n$ represents the net peak area per time unit (or full energy interaction rate or count rate) corresponding to the gamma-ray of energy $E_n$ emitted by the isotope *i*. The isotope *i* is distributed in the measured volume. The density of the isotope *i* is $\alpha w_e \rho$, where $\alpha$ is the abundance of the isotope, $w_e$ is the mass fraction of the nuclear element with *i* as isotope, $\rho$ is the volume density. The specific emission rate (*I*) of the $E_n$ gamma-ray of the isotope *i* is then $\beta\lambda N_{Av}/A$, where $N_{Av}$ is the Avogadro number, $\beta$ is the emission probability of the considered photon, $\lambda$ is the decay constant and *A* the atomic weight of *i.* The full energy detection efficiency is $\varepsilon(E_n)$, it includes the energy dependent intrinsic detector efficiency and the measurement geometry (collimator and distance). The linear attenuation coefficient of the volume is $\mu(E_n)\rho$ and it is calculated with (1a) where $\mu_e(E_n)$ and $\rho_e$ are respectively the energy dependent mass attenuation coefficient and the partial density of the nuclear element and $\mu_m(E_n)$ and $\rho_m$ are respectively the mass attenuation coefficient and the partial density of the nuclear fuel matrix. $T_w$ represents the volume wall transmission calculated with (1b) where $\mu_W(E_n)\rho_W$ is the linear attenuation coefficient and $d_W$ is the wall thickness.

Considering the $N_p$ volume, the equation (1) is reduced to the quantities of interest ($M_{38} = \alpha_{38} w_{U\rho} Sd$ and $\alpha_{35}$ respectively the U-238 mass and the U-235/U abundance) in function of the associated photon count rate (respectively $R_{38}$ and $R_{35}$).

The present method preferably uses a basic calibration constant (K) that is determined using standards. In some conditions, it may take into account the volume self-attenuation. If needed, a calibration constant *K'* is calculated by multiplying *K* with correction factors including changes in matrix composition and wall thickness.

Considering the whole sample, the U-238 total mass (extensive quantity of interest) is equal, through $K'_{38}$, to the sum of the corrected count rates from each elementary volumes $N_p$. The U-235/U abundance (intensive quantity of interest) is equal, through $K'_{35}$, to the average of the count rates from all the $N_p$ volumes.

In the following the determination of the two mentioned quantities of interest is described in detail. The fill height calculation procedure used for density calculations and for the determination of the number of volumes $N_p$ (i.e. of zones) that are of significance (i.e. where material is present) is also described.

## 1.2 U-238 mass

To compute the U-238 total mass the general expression (1) reduces to:

$$R_{38} = \varepsilon(1001) I_{38} M_{38}\ \frac{1 - e^{-\mu(1001)\rho d}}{\mu(1001)\rho d}\ T_W(1001) \tag{2}$$

where $M_{38}$ is the mass of the U-238 present in the sample volume considered, $I_{38}$ and $\varepsilon(1001)$ are respectively the specific emission rate and the full energy detection efficiency of the 1001 keV photon of U-238.

$\mu(1001)\rho$ and $T_W(1001)$ are respectively the linear attenuation coefficient calculated with (1a) and the wall transmission calculated with (1b) at the 1001 keV energy.

Since $M_{38}$ is the quantity of interest, we can write:

$$M_{38} = \left[\frac{1}{\varepsilon(1001)I_{38}}\right]\frac{1}{T_W}R_{38}\frac{\mu(1001)\rho d}{1-e^{-\mu(1001)\rho d}} \qquad (3)$$

where, assuming the transmission $T = exp(-\mu(1001)\rho d)$,

$$CF_{38}(T) = \frac{-\ln(T)}{1-T} = \frac{\mu(1001)\rho d}{1-e^{-\mu(1001)\rho d}} \qquad (3b)$$

is the correction factor of $R_{38}$ that takes in account the self-attenuation of the volume. If multiplied by $R_{38}$, $CF_{38}$ returns the corrected count rate ($CR_{38}$) that would have been observed if the sample volume was not self-attenuating. In this way $CR_{38}$ is directly proportional to the U-238 mass.

Generally $CF(T)$ is calculated as the ratio between the count rate that would be measured if the sample was totally non attenuating and the actual count rate from the sample. In this manner the calculation takes into account the position of the sample relative to the detector (inverse square dependence) and the geometrical shape of the sample. Assuming far field conditions and rectangular shape geometry, the $CF(T)$ can be expressed in the simple analytical form of (3b).

$CF(T)$ is best determined if the linear attenuation coefficient $\mu(E_m)_\rho$ is single valued. The assumptions are then made that both emitting element and matrix are homogeneous in composition and density and that the particles of material forming the volume have negligible self-attenuation. After calculating $CF(T)$ the respect of these assumptions is generally more stringent than the respect of the far field condition.

For $M_{38}$ calculation a basic calibration constant $K_{38}$ i s preferably determined using standards of the same shape and volume, and correcting $R_{38}$ for the self-attenuation:

$$K_{38} = \left[\frac{1}{\varepsilon(1001)I_{38}}\right]\frac{1}{T_{WS}} \qquad (4)$$

where $T_{WS}$ is the wall transmission of the standard.

The calibration constant $K_{38}$ takes into account the effects of detector efficiency, the measurement geometry ($\varepsilon(1001)$) and the nuclear data ($I_{38}$). If the unknown sample volume has the same wall thickness as the standard then also the $T_{WS}$ factor can be included in the basic calibration constant, otherwise it is calculated with the unknown volume wall transmission $T_{WM}$ to obtain the wall transmission correction factor $T_{WS}/T_{WM}$:

$$K'_{38} = K_{38}\frac{T_{WS}}{T_{WM}} \qquad (5)$$

The U-238 mass in the elementary volume can be determined by the simple relation:

$$M_{38} = K'_{38}\ CR_{38} \qquad (6)$$

where $K'_{38}$ is the calibration constant obtained from standards and including an eventual correction factor, $CR_{38}$ is the count rate of the sample corrected for its self-attenuation.

Since we are considering a homogeneous sample ideally divided in a series of $N$ volumes $N_p$ and $K'_{38}$ is constant, the U-238 total mass ($M^T{}_{38}$) is determined by:

$$M_{38}^{T} = \sum_{p=1}^{N} K'_{38} C R_{38p} = K'_{38}\, CF_{38} \sum_{p=1}^{N} R_{38p} \qquad (7)$$

where $R_{38p}$ is the measured count rate of each volume $N_p$.

**1.3 U-235/U abundance**

To compute the U-235/U abundance the general expression (1) reduces to:

$$R_{35} = \varepsilon(186) I_{35} \alpha_{35} \rho_U S \frac{1 - e^{-\mu(E_n)\rho d}}{\mu(E_n)\rho} T_W(186) \qquad (8)$$

where $\alpha_{35}$ is the abundance of the U-235 isotope, $\rho_U$ is the partial density of U in the sample volume considered, $I_{35}$ and $\varepsilon(186)$ are respectively the specific emission rate and the full energy detection efficiency of the 186 keV photon. $\mu(186)\rho$ and $T_W(186)$ are respectively the linear attenuation coefficient calculated with (1a) and the wall transmission calculated with (1b) at the 186 keV energy.

If the volume thickness *d* is large enough, then the exponential term in (8) becomes negligible compared to 1 over a certain value ($d_{IT}$) of *d*. It means that the photons emitted beyond $d_{IT}$ are absorbed and that the photon flux at the sample surface is independent of the sample thickness. Usually the "infinite thickness" is defined as the volume depth that produces 99.9% of the photon flux at the volume surface:

$$d_{IT} = \frac{-\ln 0.001}{\mu\rho} = \frac{6.91}{\mu\rho} \qquad (9)$$

This is the origin of the "infinite thickness" criterion on which the enrichment meter principle is based.

Usually, due to the high self-absorption values at the low energy considered, the depth of the volume visible by the detector is small. It implies that the assumed far field condition is easily verified if the visible depth is compared to the detector distance.

Since $\alpha_{35}$ is the quantity of interest, combining (8) in condition of infinite thickness and (1a), we can write:

$$\alpha_{35} = \left[\frac{\mu_U}{\varepsilon(186) I_{35} S}\right] \frac{1}{T_W} m(186) R_{35} \qquad (10)$$

where

$$m(186) = 1 + \frac{\mu_m(186)\rho_m}{\mu_U(186)\rho_U} \qquad (10b)$$

reflects the matrix attenuation effect.

For $\alpha_{35}$ calculation a basic calibration constant $K_{35}$ is preferably determined using standards that verify the infinite thickness criterion:

$$K_{35} = \left[\frac{\mu_U}{\varepsilon(186) I_{35} S}\right] \frac{1}{T_{WS}} m_S \qquad (11)$$

where $m_s$ and $T_{WS}$ are respectively the matrix attenuation and the wall transmission of the standard.

The calibration constant $K_{35}$ takes into account the effects of detector efficiency, the measurement geometry ($\varepsilon$-*(186), S*) and the nuclear data ($I_{35}$, $\mu_U$). If the sample has the same matrix composition and wall thickness as the standard then also $m$ and $T_{WS}$ factors can be considered in the basic calibration constant. In the contrary, they are calculated with the unknown volume matrix attenuation $m_M$ and wall transmission $T_{WM}$ to obtain the matrix correction factor $m_M/m_S$ and the wall correction factor $T_{WS}/T_{WM}$:

$$K'_{35} = K_{35} \frac{m_M}{m_S} \frac{T_{WS}}{T_{WM}} \qquad (12)$$

The U-235/U abundance in the elementary volume can then be determined by the simple relation:

$$\alpha_{35} = K'_{35} R_{35} \qquad (13)$$

where $K'_{35}$ is the calibration constant obtained from standards and including eventual correction factors, and $R_{35}$ is the count rate of the unknown volume sample. This way for determining $\alpha_{35}$ is the so-called enrichment meter principle.

The U-235/U abundance of the homogeneous sample ideally divided in a series of $N$ parallelepiped volumes $N_p$ is determined by:

$$\alpha_{35} = \frac{K'_{35}}{N} \sum_{p=1}^{N} R_{35p} \qquad (14)$$

where $R_{35p}$ is the count rate of each $N_p$ volume.

## 2. Remarks

### 2.1 Geometry

The container to be measured in the present method is normally not an ideal parallelepiped sample, but a cylinder. During the scanning, a portion of the container is measured by a detector through a slit collimator. This allows to approximate the elliptic cylinder segment geometrically seen by the detector with the parallelepiped volume considered in the previous paragraphs. The container-detector distance should preferably be chosen as small as possible to minimise the counting time and to maximise the resolution in determining the fill height.

### 2.2 Determination of CF for the 1001 keV photon

Generally speaking the correction factor CF for self-attenuation is a function of many parameters that in order of importance are: the linear attenuation coefficient of the material, the dimension and the shape of the sample, and the position of the sample relative to the detector.

Usually *CF* is represented as a function of the transmission $T = exp(-\mu(E_n)\rho d)$. In the present method *CF(T)* is calculated forcing the far-field condition and considering the volume as a parallelepiped. Under this last assumption an equivalent thickness $d_e$ is defined as the ratio between the area and the diameter of the cylinder section perpendicular to the axis. The mass attenuation coefficient $\mu(E_n)\rho$ is variable and it is depending on the matrix and the density of the sample.

It is to be noted that the two approximations on *CF(T)* (far field condition and volume shape) do not introduce significant biases in the mass calculation.

Finally, the CF(T) determination can be avoided when a set of calibration standards identical to the unknowns in composition, density, dimensions and shape, is available. In this case the correction factor, equal for both measured samples and standards, can be included directly in the calibration constant. This procedure is of particular interest when the characteristics of the assayed samples are fixed and well known.

### 2.3 Number of standards

The U-238 mass and the U-235/U abundance determined with (7) and (12) are linearly dependent to the count rates $R_{38}$ and $R_{35}$. It implies that the calibration constant can be determined with a single standard in the range of the unknown quantities. Anyway the use of several standards of different mass, density and enrichment is preferred. This permits to validate the results.

## 3. Preferred embodiment

### 3.1. Gamma scanning system

Fig.2 illustrates a segmented gamma scanning system 10 that is preferably used to implement the present method. The system 10 includes a collimated detector to measure the emission of gamma-rays from different horizontal slices (forming zones or segments) of a cylindrical nuclear fuel container 14 .The detector 16 is mounted on a lifting unit 18. Reference sign 20 indicates a turntable that is adapted to rotate the container 14 in the direction of arrow 22. During the measurements the detector 16 is scanned vertically past the container 14 and the gamma spectra of the container 14 are collected wh ile the container 14 is rotated to reduce bias caused by heterogeneity in the activity distribution and matrix materials.

The detector 16 may e.g. be a HPGe (high-purity germanium) or NaI(TI) (tallium doped sodium iodate) detector, as conventional in gamma spectrometry. Reference sign 24 indicates the collimator that extends between the container 14 and the detector 16. In addition to the detector 16, the acquisition chain comprises conventional acquisition electronics 26 (e.g. amplifier, computer interface, etc.) and a control unit 28 including a computer system with an operator interface, for receiving the measurement date from the acquisition electronics, and controlling the turntable as well as the lifting unit.

During measurement of each segment, the container 14 is rotated by a multiple of 360° and a complete gamma spectrum is acquired and stored in the control unit 28.

Although in the present embodiment only one collimated detector 16 is used, it will be understood that two or more collimated detectors could be used for scanning the container. Also, the container may be moved in front of the detector(s) instead of moving the detector(s) past the container.

This segmented scanning of the container 14 results in the collection of a series of gamma spectra, each corresponding to a particular zone of the container 14. The size of each zone in axial (longitudinal) direction is determined by the size of the collimator slit in axial direction (slit height). In order to obtain a complete scanning profile of the container, the latter is scanned in segments over its whole length. It follows that when scanning the container, the increment in the axial position of the detector to move from one scanning position to the next one is normally equal to the height of the collimator slit, to obtain a continuous scanning profile.

### 3.2 Preferred embodiment of the method

Fig.3 is a flowchart representing the main steps of the preferred method, which is programmed in the control unit 28.

The first step 100 consists in identifying the container (e.g. by means of a serial number) and determining *a priori* information on the container, that will be used either for comparison or calculation purposes. This *a priori* information may be stored in a database in the control unit 28 or entered by the operator in the control unit 28 e.g. before the scanning begi ns (step 100).

The present method thus uses a number of known and available data, which are referred to as *a priori* information, for determining the U-238 mass and the total oxide powder mass. The *a priori* information may include the mass of the nuclear material contained in the fuel container, the so-called U-factor ($U_f$) of the nuclear material (mass fraction of uranium in the matrix) and the container's inner cross-section.

In this regard, it is to be noted that the present method is particularly suited for on site inspections of nuclear fuel material by inspectors representing Control Authorities. In such a case, the inspector have at their disposal a number of data on the containers (i.e. the *a priori* information), and their task is in fact to verify if the containers still have the same characteristics. The present method thus advantageously uses some of the *a priori* information to simplify the calculations.

However, if e.g. the mass of the nuclear material and U-factor were not available for a container to be measured, it would be possible to determine these values by iterative calculations.

Then the control unit 28 starts the rotation of the turntable (110) and controls the lifting unit 18 to move the detector 16 to the first position (step 120), typically at the level of the lower end of the container 14. Gamma-ray emissions are thus detected in this first position as the container is rotated (by a multiple of 360°), whereby a gamma spectrum for the first zone is collected, and which is then stored (step 130) in the control unit 28.

Then the collimated detector 16 is moved by the lifting unit 18 to the next position (140) and the gamma spectrum is collected and stored (150) for this second zone.

This operation is repeated until the detector 16 reaches the opposite (up-per) end of the container 14. At that moment, the response to test 160 is "YES", so that the turntable 20 is stopped and the detector 16 is brought back into its initial position (170). The container 14 can then be removed from the turntable 20 and the data analysis begins.

The data analysis is carried out by the control unit 28 which starts with extracting for each zone the count rates for the 186 keV and 1001 keV energy peaks. Indeed, during acquisition of the gamma spectra, detector pulses (the intensities of which depend on the energy of the detected gamma-rays) are sorted in function of the intensity of the gamma-rays to which they correspond and are counted, which gives the intensity of each peak. The extracted count rates are preferably obtained from net peak areas on the gamma spectra, which are obtained by subtracting background noise to gross counting, as is conventionally done in spectrometry.

This spectral analysis shall further preferably take into account deviations from the theoretical values, so that the contribution of the 186 keV photons is determined within a predetermined energy range that includes the 186 keV peak and the contribution of the 1001 keV photons is determined within a predetermined energy range that includes the 1001 keV peak. These energy ranges depend on the acquisition chain characteristics and mainly on the energy resolution of the detector.

At next step 190 the container fill height is determined based on the profile of the 186 keV count rates. This will be explained in more detail further below.

From the container section and the fuel material mass known from step 100 as well as from the previously determined container fill height, the nuclear fuel material density is calculated at step 200. The density ρ is calculated as the ratio of the *a priori* mass of nuclear fuel material in the container over the determined volume of the container (*a priori* cross-section multiplied by the measured fill height).

Then the density p is used to compute (step 210) the self-attenuation factors $CF_{38}$ at 1001 keV according to (3b) and the matrix attenuation factor *m(186)* at 186 keV according to (10b).

At next step 220, the 1001 keV profile is integrated over the fill-height of the container. At step 180, the 1001 keV count rates are determined for each zone. Plotting these count rates in function of the axial position of the zone gives a 1001 keV profile for the container, as e.g. shown in Fig.4. Integrating this profile over the container fill-height (i.e. basically over the zones where nuclear material is present) leads to the total count rate for the 1001 keV photons, which is the result of the sum in formula (7).

This then permits the calculation of the total mass of U-238, $M^T_{38}$, in the container by using the calibration constant $K'_{38}$ and correction factor $CF_{38}$ according to (7).

The calculation of the enrichment requires the average count rate of the 186 keV photons detected for the container. As has been done at step 220, plotting the 186 keV count rates for each zone in function of the zone position gives the 186 keV profile of the container. Such a scanning profile for the 185.7 keV photon is shown for example on Fig.5. The average count rate is preferably determined by integrating the plateau zone of this curve, and then dividing this sum by the number of zones corresponding to the plateau zone, thus leading to the average value in formula (14).

Regarding Figs.4 and 5, they each show three scanning profiles of the same container but measured with different collimators, with the same acquisition time of 10 s and a zone size (corresponding to the collimator slit height) of 5 mm. For both graphs the measurements carried out with the collimator indicated 10/50 are considered the most appropriate.

At further step 250, the U-235 enrichment $\alpha_{35}$ is then calculated using the calibration constant $K'_{35}$, according to formula (14).

Next, the total mass of nuclear material is calculated at step 260. As mentioned, in the present method the nuclear material under analysis is uranium oxide. The oxide powder amount $M^T_{Ox}$ is obtained from:

$$\mathrm{M}^T_{OX} = \frac{1}{U_f}\,\frac{M^T_{38}}{1-\alpha_{35}} \qquad (21)$$

where $U_f$ is the operator declared U-factor (i.e. the mass fraction of uranium with regard to the uranium oxide powder mass). The U-238 mass $M^T_{38}$ and the U-235/U abundance $\alpha_{35}$ are obtained from (7) and (14).

Finally, the obtained results are displayed and/or printed, as indicated by step 270.

## 3.3 Analysis procedures

### 3.3.1 Fill height

The fill height of the whole container may be obtained from the 186 and/or 1001 keV profiles. The fill height is used for density calculations and for fixing the number N of segments (zones) considered in (7) and (14).

The well-known function herebelow returns the count rate measured by a non-collimated point detector moving along the z axis of a finite line source of height H:

$$R(z)=\frac{\varepsilon I}{D}\left(arctg\left[\frac{z-z_0}{D}\right]-arctg\left[\frac{z-(z_0+H)}{D}\right]\right) \quad (15)$$

where ε is the intrinsic efficiency of the detector, *I* is the intensity per unit length of the non attenuating source, *D* is the detector-source distance and $z_0$ is the bottom edge of the source.

The formula easily fits also the profiles obtained with collimated detector along the z axis of the sample:

$$R(z)=\frac{R_p}{\pi}\left(arctg\left[\frac{z-z_0}{D}\right]-arctg\left[\frac{z-(z_0+H)}{D}\right]\right) \quad (16)$$

where now π is the normalization constant for returning the plateau count rate $R_p$ and *D* is the height resolution parameters of the system. *D* depends on the detector-source distance and the collimator geometry. The relation between *D* and the FWHM (Full Width at Half Maximum) of the line-spread function is: FWHM = *2*D*. The iterative weighted least square fit of the axial profile results in the bottom edge $z_0$ and in the fill height *H* of the sample.

The region of the constant response profile can also be determined by a study of successive variances $\sigma^2(z_k)$ along the z axis:

$$\sigma^2(z_k)=\frac{1}{12}\sum_{i=k-2}^{k+2}(c_i-c_m)^2 \quad (17)$$

where $c_i$ is the value of the net peak area *i* and $c_m$ the average of $c_i$ in the interval considered. $\sigma^2(z_k)$ is function of the z-coordinate and shows two maxima. The difference between the two maxima can also be used to estimate the fill height H of the sample. In our case this procedure will be used only for determining the initial guess values for fitting equation (16).

Because of the possible non-uniformity of the material surface slope at the top edge of the container, in the relation (16) D is considered different for the $z_0$ region ($D_1$) and the $z_0+H$ region ($D_2$).

In the present method, the fill height of the container is preferably obtained from the 186 keV scanning profile with (16), assuming D different for the two edge regions. The fill height is used for density calculation and for fixing the intervals of $R_{38j}$ and $R_{35j}$ integration respectively in (7) and (14). In case of $R_{38j}$ the integration range includes the tails. Since $\alpha_{35}$ is an intensive quantity, in case of $R_{35j}$ the interval is restricted to the central part of the plateau to apply the enrichment meter principle. Fig.6 shows an example of the least square fitting for a typical 186 keV profile with (16) and D variable for the two edge regions.

## 3.3.2 Self-absorption correction factor CF(T)

The correction factor for 1001 keV photon self-attenuation, used for determining both the U-238 mass and the associated calibration constant, is calculated with (3b).

The mass attenuation coefficient μ*(1001)* in (3b) is calculated with (1a) knowing the $U_f$ of the powder: $\mu=\mu_U*U_f+\mu_m*(1-U_f)$. Typical values of μ*(1001)* are reported in Table 1.

Table 1:

| Typical values of μ for 1001 keV photon | | |
|---|---|---|
| Compound | $U_f$ | μ at 1001keV ($cm^2/g$) |
| U | 1 | 7.896* $10^{-2}$ |
| O | 0 | 6.372*$10^{-2}$ |
| $UO_2$ | 0.881 | 7.715*$10^{-2}$ |
| $U_3O_8$ | 0.848 | 7.664*$10^{-2}$ |

As previously mentioned with regard to step 200, the density p is calculated with: $\rho = (M^TOX)_{dec}/S_c*H$ where

$(M^T_{OX})_{dec}$ is the operator declared (i.e. a *priori*) powder amount, $S_c$ is the internal cross-section (*a priori* information) of the container and *H* is the fill height calculated with (16).

Equation (3b) holds only for plane geometry, where d is the slab thickness. In cylindrical geometry, d is replaced by an equivalent thickness $d_e$ calculated with $d_e = \pi d_c/4 = S_c/d_c$ where $d_c$ and $S_c$ are respectively the internal diameter and the internal cross-section of the container.

### 3.3.3 Calibration constant and correction factors

The two basic calibration constants $K_{38}$ and $K_{35}$ are determined from (7) and (14), based on scanning with standard containers of known U-238 mass and enrichment. From the measured 1001 keV count rates and the known value of U-238 Mass $M^T_{38}$, but also using the correction factor $CF_{38}$ , one may determine $K_{38}$ reverting formula (7). $K_{35}$ can be determined from the measured 186 keV count rate and the known enrichment $\alpha_{35}$ by reverting formula (14). Indeed, in the calculation of $K_{35}$ the matrix correction factor *m(186)* is not needed since a standard is used. The matrix correction only intervenes in the unknown sample measurement to take into account the difference between the sample and the standard when computing $K'_{35}$ (see formula 12).

The matrix correction factor for $K_{35}$ is the ratio between the two matrix attenuation coefficients $(m_M/m_S)$ at 186 keV (12). The matrix attenuation coefficient *m(186)* is obtained from (10b) knowing the $U_f$ of the powder: $m=1+\mu_m*(1-U_f)/\mu_U*U_f$. Typical values of *m(186)* are reported in Table 2. Usually small fluctuations of $U_f$ in the same powder batch do not appreciably affect the matrix attenuation coefficient and can be neglected.

Table 2:

| Typical values of m for 186-keV photon | | |
|---|---|---|
| Compound | $U_f$ | *m* at 186keV |
| U | 1 | 1 |
| O | 0 | ∞ |
| $UO_2$ | 0.881 | 1.010 |
| $U_3O_8$ | 0.848 | 1.014 |

The wall correction factor for $K_{38}$ and $K_{35}$ is the ratio between the wall transmission coefficients ($T_{WS}/T_{WM}$) respectively at the energies of 1001 and 186 keV (5, 12). The wall transmission coefficient $T_W$ at the energy of interest is obtained from (1b). Usually the sample container is the same used for calibration standards and there is no need to correct for the wall transmission coefficient.

## Claims

1. A method for determining the uranium content in a container of nuclear material **characterised by** the following steps:

   detecting the gamma-ray emissions due to the natural radioactive decay of said nuclear material in a number of zones of said container;

   analysing the gamma-ray signals from each of said zones to determine for each zone a gamma-ray count indicative of gamma-rays having an energy of 1001 keV; and

   determining an indication of the total uranium-238 content in said container based on the gamma-ray counts determined for at least part of said zones.

2. The method according to claim 1, **characterised in that** said gamma-ray count in each zone is determined within a predetermined range of energy including the 1001 keV peak.

3. The method according to claim 1 or 2, **characterised in that** said natural gamma-ray emissions are detected sequentially in zones along a longitudinal axis of said container.

4. The method according to claim 3, **characterised in that** for each zone, said natural gamma-ray emissions are detected around the whole periphery of said container.

5. The method according to claim 3 or 4, **characterised in that** said natural gamma-ray emissions are detected by means of a collimated detector, and that the size of a zone in said longitudinal direction of said container corresponds to the collimator slit of said collimated detector.

6. The method according to any one of the preceding claims, **characterised in that** said gamma-ray counts are corrected for self-attenuation.

7. The method according to claim 6, **characterised in that** said correction for self-attenuation takes into account the density and mass fraction of uranium in said nuclear material, said density being determined from the measured fill height of said container and known values of the mass of said nuclear material and the inner section of said container.

8. The method according to claim 7, **characterised in that** said fill height of said container is determined by analysis of a gamma-ray profile of said container.

9. The method according to claim 8, **characterised in that** said fill height is determined with an iterative weighted least square fit of said gamma-ray profile.

10. The method according to any one of the preceding claims, **characterised in that** the determination of the U-238 content uses a calibration constant taking into account the effects of detector efficiency, the measurement geometry and the specific U-238 emission rate.

11. The method according to any one of the preceding claims, **characterised in that** said indication of the total uranium-238 content in said container is proportional to the sum of said 1001 keV gamma-ray counts over the fill height of said container..

12. The method according to any one of the preceding claims, **characterised by** analysing the gamma-ray signals from each of said zones to determine for each zone a second gamma-ray count representative of gamma-rays having an energy of 185.7 keV; and
determining an indication of the U-235 abundance in said container based on the second gamma-ray counts determined for at least part of the zones.

13. The method according to claim 12, **characterised in that** said second gamma-ray count is determined within a predetermined range of energy including the characteristic peak of 185.7 keV.

14. The method according to claim 12 or 13, **characterised in that** said indication of the U-235 abundance in said container is determined by multiplying the average of the second gamma-ray counts from at least part of said zones by a calibration constant.

15. The method according to claim 14, **characterised in that** said calibration constant takes into account matrix attenuation effects.

16. The method according to any one of the preceding claims, **characterised in that** said nuclear material comprises uranium oxide powder.

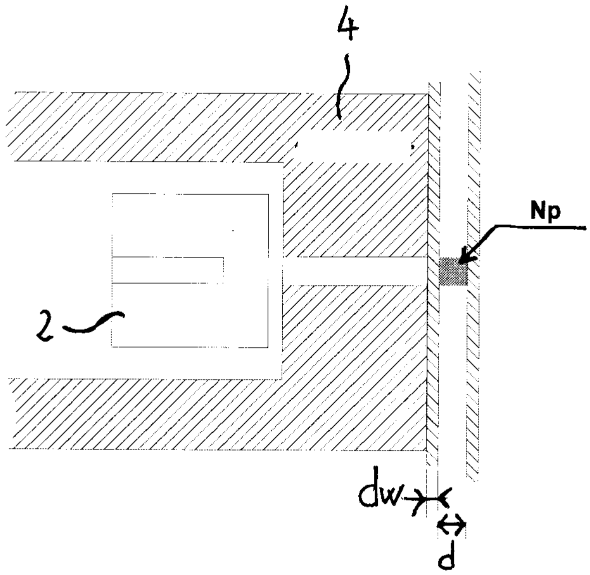


Fig. 1

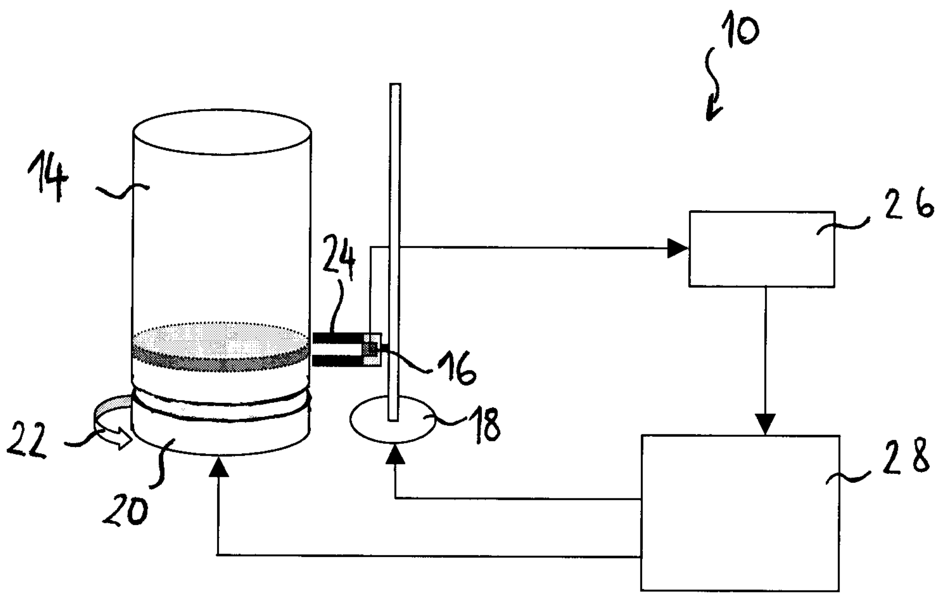


Fig. 2

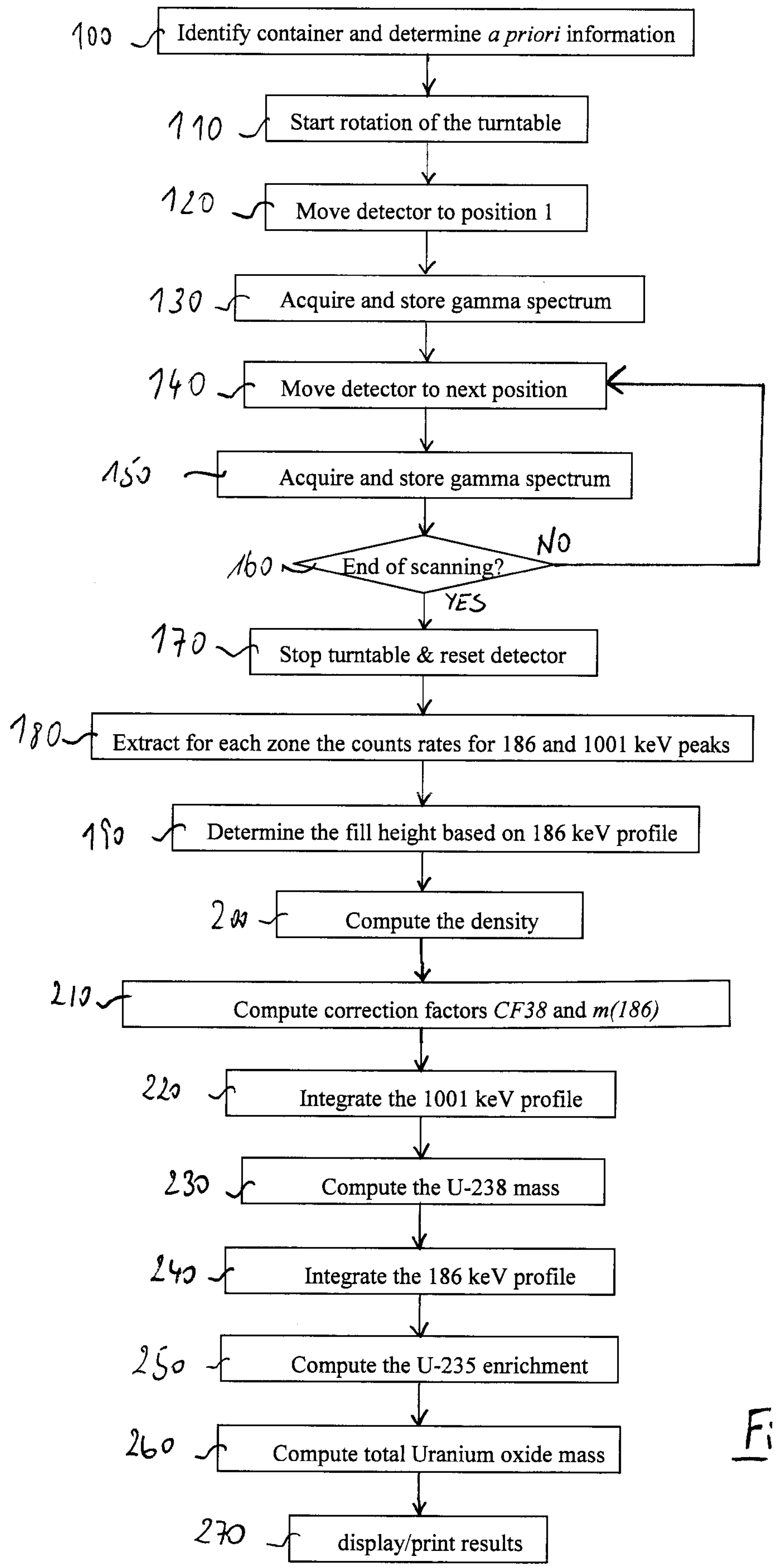
100
Identify container and determine *a priori* information
110
Start rotation of the turntable
120
Move detector to position 1
130
Acquire and store gamma spectrum
140
Move detector to next position
150
Acquire and store gamma spectrum
160
End of scanning?
NO
YES
170
Stop turntable & reset detector
180
Extract for each zone the counts rates for 186 and 1001 keV peaks
190
Determine the fill height based on 186 keV profile
200
Compute the density
210
Compute correction factors *CF38* and *m(186)*
220
Integrate the 1001 keV profile
230
Compute the U-238 mass
240
Integrate the 186 keV profile
250
Compute the U-235 enrichment
260
Compute total Uranium oxide mass
270
display/print results

Fig 3

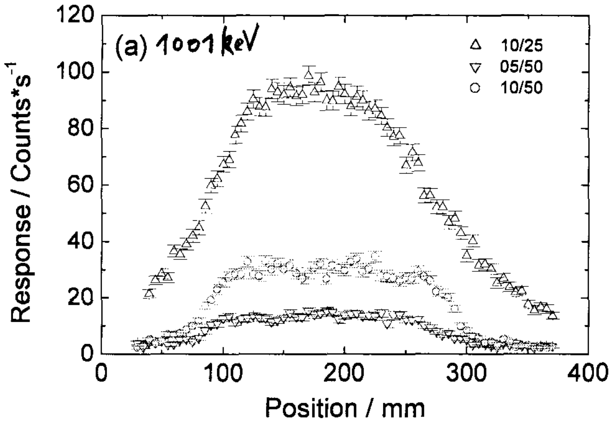


Fig. 4

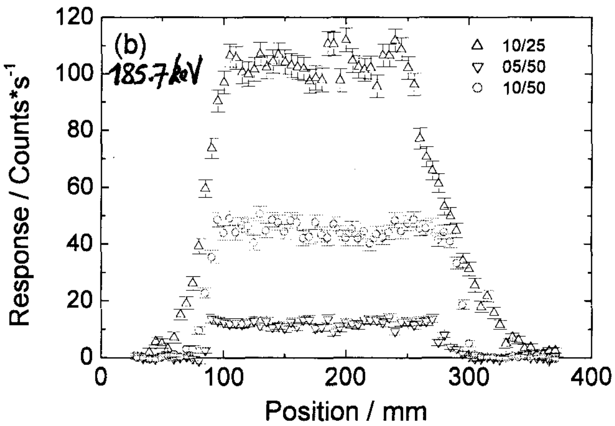


Fig. 5

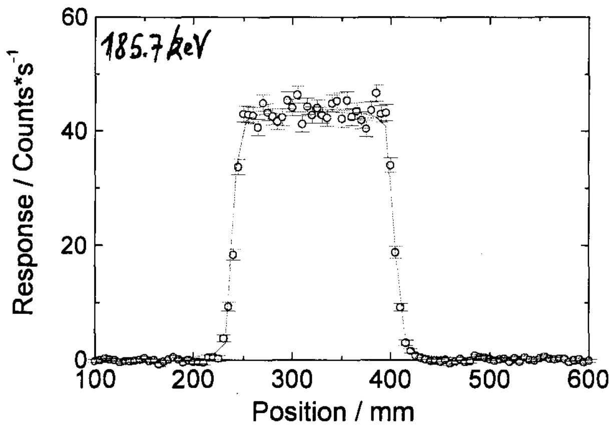


Fig. 6

European Patent Office

# EUROPEAN SEARCH REPORT

Application Number
EP 03 10 4965

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 018, no. 175 (P-1716), 24 March 1994 (1994-03-24) -& JP 05 340861 A (MITSUBISHI NUCLEAR FUEL CO LTD), 24 December 1993 (1993-12-24) * abstract * | 1-4,7, 12,13 | G01T1/167 G01T1/178 |
| A | | 5,6, 8-11, 14-16 | |
| | --- | | |
| X | YUCEL H ET AL: "Use of the 1001 keV peak of Pa daughter of U in measurement of uranium concentration by HPGe gamma-ray spectrometry" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 413, no. 1, 11 August 1998 (1998-08-11), pages 74-82, XP004134693 ISSN: 0168-9002 * the whole document * | 1,6,16 | |
| | --- | | **TECHNICAL FIELDS SEARCHED (Int.Cl.7)** G01T G21C G21F G01N |
| A | GARCIA-TALAVERA M: "Evaluation of the suitability of various gamma lines for the gamma spectrometric determination of U in environmental samples" APPLIED RADIATION AND ISOTOPES, PERGAMON PRESS LTD., EXETER, GB, vol. 59, no. 2-3, August 2003 (2003-08), pages 165-173, XP004448576 ISSN: 0969-8043 * page 165, paragraph 1 * * page 169, paragraph 5 - page 172, paragraph 7 * | 1-16 | |
| | --- -/-- | | |

The present search report has been drawn up for all claims

1

| Place of search | Date of completion of the search | Examiner |
|---|---|---|
| MUNICH | 4 May 2004 | Coda, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

# EUROPEAN SEARCH REPORT

Application Number
EP 03 10 4965

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DMITFENKO V V ET AL: "High-pressure xenon detector to identify and monitor nuclear materials" NUCLEAR SCIENCE SYMPOSIUM, 1996. CONFERENCE RECORD., 1996 IEEE ANAHEIM, CA, USA 2-9 NOV. 1996, NEW YORK, NY, USA,IEEE, US, 2 November 1996 (1996-11-02), pages 938-941, XP010223694 ISBN: 0-7803-3534-1 * the whole document * ----- | 1 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 4 May 2004 | Coda, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

**ANNEX TO THE EUROPEAN SEARCH REPORT ON EUROPEAN PATENT APPLICATION NO.** EP 03 10 4965

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2004

| Patent document cited in search report | | Publication date | Patent family member(s) | Publication date |
|---|---|---|---|---|
| JP 05340861 | A | 24-12-1993 | NONE | |

EPO FORM P0459

For more details about this annex : see Official Journal of the European Patent Office, No. 12/82